# EUROPÄISCHE PATENTSCHRIFT

(11) **EP 0 848 443 B1**
(45) Veröffentlichungstag und Bekanntmachung des Hinweises auf die Patenterteilung: **12.09.2001**
(21) Anmeldenummer: 97119023.6
(22) Anmeldetag: 31.10.1997
(51) Int. Cl.: H01M 10/28

(54) **Alkalischer Akkumulator und Verfahren zu seiner Herstellung**
Alkaline accumulator and process of manufacture
Accumulateur alcalin et son procédé de fabrication

(30) Priorität: 13.12.1996 DE 19651978
(43) Veröffentlichungstag der Anmeldung: 17.06.1998
(73) Patentinhaber: VARTA Gerätebatterie GmbH, 30419 Hannover (DE)
(72) Erfinder: Lindner, Hans Jürgen, Dr., 457911 Singapore (SG)
(74) Vertreter: Kaiser, Dieter Ralf, Dipl.-Ing.

(56) Entgegenhaltungen:
- DE-A- 1 596 306
- DE-A- 4 305 561
- DE-A- 4 325 628
- US-A- 4 882 242

## Beschreibung

Die Erfindung betrifft einen alkalischen Akkumulator mit tablettenförmigen Elektroden in einem becherförmigen Unterteil und einem darin eingepaßten deckelförmigen Oberteil, die unter Zwischenlage eines Dichtringes durch Bördelung oder Crimpung miteinander verbunden sind. Die Erfindung betrifft weiterhin ein Verfahren zur Herstellung der vorstehend beschriebenen Akkumulatoren.

Aus dem Dokument DE-PS 1596306 ist ein Akkumulator bekannt, bei dem die Elektroden von zwei übereinandergreifenden, isolierenden Ringen gehalten werden. Die vorgeschlagene Verbindung der isolierenden Ringe durch Verschraubung oder Bajonettverschluß, die vorgesehenen Stromableitungen sowie die Anzahl der verwendeten Teile lassen keine rationelle, automatisierte Fertigung zu.

Der DE 43 25 628 A1 ist eine gasdicht verschlossene Knopfzelle zu entnehmen, bei der die Elektroden/Separator-Einheit bei der Montage in einen elektrisch isolierenden Stützring mit angeformter Scheibe eingebracht wird.

Die Erfindung hat sich die Aufgabe gestellt, einen Akkumulator mit einer Montagehilfe für die Elektroden und ein einfaches Verfahren zur Herstellung solcher Akkumulatoren anzugeben.

Erfindungsgemäß wird die Aufgabe durch einen alkalischen Akkumulator gelöst, wie er in Anspruch 1 angegeben ist.

In den Unteransprüchen 2 - 4 sind vorteilhafte Weiterbildungen des Gegenstands der Erfindung angeführt.

Die tablettenförmigen Elektroden und der zwischen ihnen angeordnete Separator sind in einen einseitig offenen, elektrisch nichtleitenden Montagekäfig eingesetzt. Die Haltearme am Montagekäfig dienen beim Einlegen des Separators als seitliche Zentrierhilfen, wodurch eine versatz- und verzugfreie Zentrierung des Separators erreicht wird. Die Dicke der Haltearme sorgt zudem für einen definierten seitlichen Expansionsraum zwischen dem Elektrodensatz und dem aus dem becherförmigen Unterteil und dem deckelförmigen Oberteil gebildeten Akkumulatorengehäuse.

Die erfindungsgemäße Lösung gestattet eine nebenschlußsichere Montage der positiven und negativen Elektrode, wobei die Herstellung durch die Verwendung eines einteiligen Montagekäfigs vereinfacht ist.

Der erfindungsgemäße Akkumulator wird dadurch hergestellt, daß die Elektrodentabletten unter Zwischenlage eines Separators in einen einseitig offen, einteiligen Montagekäfig eingelegt werden. Dieser Elektrodensatz wird im becherförmigen Unterteil plaziert und mit Elektrolyt getränkt, das deckelförmige Oberteil wird unter Zwischenlage eines elektrisch isolierenden Dichtringes aufgelegt und durch Umbördeln oder Crimpen des Becherrandes über den Deckelrand verschlossen, wobei eine Kontaktfeder auf der vom Ring begrenzten Seite des Montagekäfiges den elektrischen Kontakt herstellt. Durch den einteiligen Montagekäfig wird die Fertigung in der Weise vereinfacht, daß die Elektroden und der Separator zu einem Elektrodensatz zusammengefaßt werden, der magazinierfähig ist und eine automatische Fertigung gestattet.

Das Verfahren zur Herstellung des erfindungsgemäßen Akkumulators wird in den Ansprüchen 5 - 7 näher erläutert. Durch die vorgeschlagene Verfahrensweise wird erreicht, daß der Elektrodensatz außerhalb des becherförmigen Akkumulatorengefäßes bei definierter Elektrodengeometrie einer Entkarbonisierung und/oder Elektrolyttränkung unterzogen werden kann. Weiterhin wird dadurch eine verzugsfreie, gleichförmige Benetzung des Separators erreicht und die Elektrolytzugabe in das becherförmige Akkumulatorengehäuse kann eingeschränkt werden oder vollständig unterbleiben.

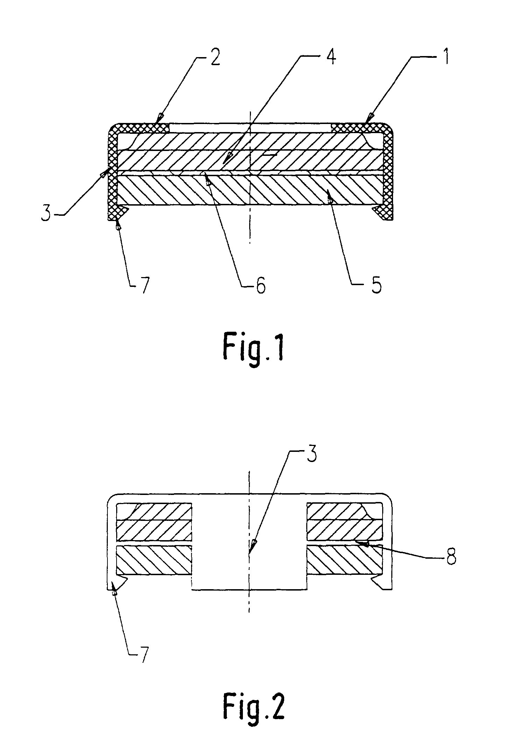

Anhand der Figuren 1 und 2 werden einige Ausführungsformen der Erfindung näher erläutert.

Figur 1 zeigt einen Querschnitt durch einen von dem Montagekäfig 1 zusammengehaltenen Elektrodensatz, der aus der negativen Elektrode 4, dem Separator 6 und der positiven Elektrode 5 besteht. Die negative Elektrode 4 liegt dabei am Ring 2 des Montagekäfigs 1 an und der Separator 6 sowie die positive Elektrode 5 werden durch die Haltearme 3 und die daran befindlichen Vorsprünge 7 lagegenau darüber gehalten. Der Montagekäfig 1 ist aus einem isolierenden Kunststoff, wie PE, PP, PVC, PTFE oder ähnlichen in Spritzgußtechnik gefertigt. Die Elektroden können in Nickeldrahtgewebe eingepackt oder in Nickelschaum einpastiert sein. Zum Volumenausgleich und zur Kontaktierung wird auf der vom Ring 2 begrenzten Seite des Montagekäfigs 1 eine Kontaktfeder aufgelegt, die als Stromableiter dient.

Figur 2 zeigt die Seitenansicht des Montagekäfigs 1. Die ringartige Verbindung 8 der Haltearme 3 erhöht die Stabilität des Montagekäfigs 1 und verbessert durch ihre Anordnung in Bereich des Separators 6 die Nebenschlußsicherheit. Die Dicke der Haltearme 3 gewährleistet den für das bei Überladereaktionen entstehende Gas notwendigen Gasaustauschraum.

## Patentansprüche

1. Alkalischer Akkumulator mit tablettenförmigen Elektroden in einem becherförmigen Unterteil und einem darin eingepaßten deckelförmigen Oberteil, die durch Zwischenlage eines Dichtringes durch Bördelung oder Crimpung miteinander verbunden sind, **dadurch gekennzeichnet, daß** die tablettenförmigen Elektroden (4,5) und der zwischen ihnen angeordnete Separator (6) in einen einseitig offenen, elektrisch nichtleitenden Montagekäfig (1) eingesetzt sind, der aus einem Ring (2) besteht, von dessen äußerem Rand sich über die Dicke des aus den beiden Elektrodentabletten (4,5) und dem Separator (6) gebildeten Elektrodensatzes hinweg Haltearme (3) erstrecken, die an ihrem anderen Ende auf der nach innen gerichteten Seite Vorsprünge (7) aufweisen.

2. Alkalischer Akkumulator nach Anspruch 1, **dadurch gekennzeichnet, daß** die Haltearme (3) des Montagekäfigs (1) durch eine umlaufende Verbindung (8) ringförmig miteinander verbunden sind.

3. Alkalischer Akkumulator nach Anspruch 1 oder 2, **dadurch gekennzeichnet, daß** der Montagekäfig (1) kegelstumpfförmig ist, wobei der Ring (2) den Abschluß auf der kleineren Kreisfläche des Kegelstumpfes bildet.

4. Verfahren zur Herstellung eines alkalischen Akkumulators gemäß einem der Ansprüche 1 bis 3, **dadurch gekennzeichnet, daß** die Elektrodentabletten (4,5) unter Zwischenlage eines Separators (6) in einen einseitig offenen, einteiligen Montagekäfig (1) eingelegt werden, dieser Elektrodensatz im Elektrodenbecher plaziert und mit Elektrolyt getränkt wird, der Deckel unter Zwischenlage eines elektrisch isolierenden Dichtringes durch Umbördeln oder Crimpen des Becherrandes über den Deckelrand verschlossen wird, wobei eine Kontaktfeder auf die vom Ring (2) begrenzte Seite des Montagekäfigs (1) aufgelegt wird und den elektrischen Kontakt herstellt.

5. Verfahren nach Anspruch 4, **dadurch gekennzeichnet, daß** der aus den im Montagekäfig (1) angeordneten Elektrodentabletten (4,5) gebildete Elektrodensatz einer Entkarbonisierung und/oder Elektrolyttränkung unterzogen wird.

6. Verfahren nach Anspruch 4 oder 5, **dadurch gekennzeichnet, daß** das Einlegen der Elektrodentabletten (4,5) und des Separators (6) in den Montagekäfig (1) in der Reihenfolge negative Elektrode (4), Separator (6), positive Elektrode (5) erfolgt.

7. Verfahren nach Anspruch 6, **dadurch gekennzeichnet, daß** eine Kontaktfeder auf die negative Elektrode (4) aufgelegt wird.

## Claims

1. Alkaline rechargeable battery having electrodes in the form of tablets in a lower part in the form of a cup and an upper part in the form of a lid which fits into said lower part, which lower part and upper part are connected to one another by swaging or crimping with the interposition of a sealing ring, **characterized in that** the electrodes (4, 5), in the form of tablets, and the separator (6) arranged between them are inserted into an electrically non-conductive mounting cage (1), which is open on one side and comprises a ring (2) from whose outer edge retaining arms (3) extend over the thickness of the electrode set formed from the two electrode tablets (4, 5) and the separator (6), and these retaining arms (3) have projections (7) on the side pointing inward at their other end.

2. Alkaline rechargeable battery according to Claim 1, **characterized in that** the retaining arms (3) of the mounting cage (1) are connected to one another in an annular shape by a circumferential joint (8).

3. Alkaline rechargeable battery according to Claim 1 or 2, **characterized in that**, wherein the mounting cage (1) has the shape of a truncated cone, the ring (2) forming the termination on the smaller circular surface of the truncated cone.

4. Method for manufacturing an alkaline rechargeable battery according to one of Claims 1 to 3, **characterized in that** the electrode tablets (4, 5) are inserted into an integral mounting cage (1), open on one side, with the interposition of a separator (6), this electrode set is placed in the electrode container and is impregnated with electrolyte, and the lid is sealed by swaging or crimping the edge of the container over the edge of the lid with the interposition of an electrically insulating sealing ring, a contact spring being fitted on the side of the mounting cage (1) bounded by the ring (2) and making the electrical contact.

5. Method according to Claim 4, **characterized in that** the electrode set formed from the electrode tablets (4, 5) arranged in the mounting cage (1) is subjected to decarbonization and/or electrolyte impregnation.

6. Method according to Claim 4 or 5, **characterized in that** the electrode tablets (4, 5) and the separator (6) are inserted in the mounting cage (1) in the sequence negative electrode (4), separator (6), positive electrode (5).

7. Method according to Claim 6, **characterized in that** a contact spring is fitted on the negative electrode (4).

## Revendications

1. Accumulateur alcalin avec des électrodes en forme de tablettes dans une partie inférieure en forme de gobelet et une partie supérieure en forme de couvercle adaptée dans cette partie inférieure, ces deux parties étant reliées l'une à l'autre par sertissage ou rabattage, avec interposition d'un joint d'étanchéité,
**caractérisé en ce que**
les électrodes en forme de tablettes (4, 5) et le séparateur (6) interposé entre elles, sont placés dans une cage de montage (1) non-conductrice électrique ouverte d'un côté, cette cage étant formée d'un anneau (2) dont le bord extérieur se prolonge par des bras de fixation (3) qui passent sur l'épaisseur du jeu d'électrodes formé des deux tablettes d'électrodes (4, 5) et du séparateur (6), ces bras ayant à leur autre extrémité, des saillies (7) dirigées vers l'intérieur.

2. Accumulateur alcalin selon la revendication 1,
**caractérisé en ce que**
les bras de fixation (3) de la cage de montage (1) sont reliés, dans la direction annulaire, par une liaison périphérique (8).

3. Accumulateur alcalin selon les revendications 1 ou 2,
**caractérisé en ce que**
la cage de montage (1) est en forme de tronc de cône, l'anneau (2) constituant le moyen de fermeture de la plus petite base du tronc de cône.

4. Procédé de fabrication d'un accumulateur alcalin selon l'une quelconque des revendications 1 à 3,
**caractérisé en ce qu'**
on place les tablettes formant les électrodes (4, 5), avec interposition d'un séparateur (6), dans une cage de montage (1) en une seule pièce, ouverte d'un côté ; on positionne ce jeu d'électrodes dans un gobelet à électrodes et on imprègne avec de l'électrolyte ; on ferme le couvercle, avec interposition d'un joint d'étanchéité isolant électrique, par sertissage ou rabattage du bord du gobelet par-dessus le bord du couvercle ; et un ressort de contact placé sur le côté de la cage de montage (1) délimité par l'anneau (2) réalise le contact électrique.

5. Procédé selon la revendication 4,
**caractérisé en ce que**
le jeu d'électrodes formé des tablettes d'électrodes (4, 5) placées dans la cage de montage (1), est soumis à une opération de décarbonisation et/ou d'imprégnation avec de l'électrolyte.

6. Procédé selon l'une quelconque des revendications 4 ou 5,
**caractérisé en ce qu'**
on introduit les tablettes d'électrodes (4, 5) et le séparateur (6) dans la cage de montage (1), dans l'ordre suivant : électrode négative (4), séparateur (6), électrode positive (5).

7. Procédé selon la revendication 6,
**caractérisé en ce qu'**
on place un ressort de contact sur l'électrode négative (4).
